# EUROPÄISCHE PATENTSCHRIFT

(11) **EP 0 697 529 B1**
(45) Veröffentlichungstag und Bekanntmachung des Hinweises auf die Patenterteilung: **16.09.1998**
(21) Anmeldenummer: 95110142.7
(22) Anmeldetag: 29.06.1995
(51) Int. Cl.: F16B 13/12

(54) **Spreizdübel aus Kunststoff**
Expansion dowel made of plastic
Cheville d'expansion en matière plastique

(30) Priorität: 19.08.1994 DE 9413434 U
(43) Veröffentlichungstag der Anmeldung: 21.02.1996
(73) Patentinhaber: fischerwerke Artur Fischer GmbH & Co. KG, D-72178 Waldachtal (DE)
(72) Erfinder: Fischer, Artur, Prof. Dr. h.c. Dr.-Ing. E.h., D-72178 Waldachtal (DE); Nehl, Wolfgang, D-72178 Waldachtal (DE)

(56) Entgegenhaltungen:
- EP-A- 0 401 159
- DE-A- 3 101 472
- DE-A- 4 117 503

## Beschreibung

Die Erfindung betrifft einen Spreizdübel aus Kunststoff mit einem über einen Teil seiner Länge verlaufenden Schlitz und einem Längskanal gemäß der Gattung des Anspruches 1.

Aus der DE-PS 10 97 117 ist ein über einen Teil seiner Länge geschlitzter, zylinderförmiger Spreizdübel aus Kunststoff bekannt, dessen hinteres Ende eine Längsbohrung zum Einführen einer Befestigungsschraube aufweist. Der erste Abschnitt dieser Längsbohrung ist zylindrisch ausgebildet und weist einen etwa dem Außendurchmesser der Befestigungschraube entsprechenden Durchmesser auf. An diesem zylindrischen Abschnitt schließt sich eine konische Verjüngung an, die in dem im vorderen Bereich als Aufspaltung ausgebildeten Schlitz des Dübels ausläuft. Durch die konische Verjüngung der Längsbohrung des Dübels ergibt sich eine kreisförmige Querschnittsverengung, die beim Eindrehen der Befestigungsschraube einen hohen Einschraubwiderstand verursacht. Die durch den Längsschlitz gebildeten Spreizsegmente des Dübels können zwar rechtwinklig zur Schlitzebene zur Verminderung des Einschraubwiderstandes nachgeben, in Schlitzebene muß jedoch das Gewinde der Befestigungsschraube voll in das Dübelmaterial eingeschnitten werden. Da in der Schlitzebene keine Aufspreizung des Dübels erfolgen kann, wird dieser erhöhte Einschraubwiderstand nicht in die entsprechende Spreizkraft umgesetzt. Aufgrund des erhöhten Einschraubwiderstandes ist es insbesondere bei zu groß ausgefallenen Bohrlöchern möglich, daß der Dübel trotz am Außenumfang angeordneter Drehsicherungsrippen beim Eindrehen der Befestigungsschraube mitdreht.

In der DE 41 17 503 A1 wurde daher zur Verbesserung des vorgenannten Dübels vorgeschlagen, daß sich der zylindrische Abschnitt der Längsbohrung rechtwinklig zur Schlitzebene bis auf die Schlitzweite verengt, und daß in Schlitzebene der Durchmesser des zylindrischen Abschnittes im Bereich der Verengung annähernd erhalten bleibt. Dadurch entsteht eine im Querschnitt elliptische Verengung, die zwar den Eintreibwiderstand reduziert, jedoch die Führung der Schraube beim Eindrehen in den Spreizdübel verschlechtert. Dadurch kann die Schraube im Dübel verlaufen, so daß keine ordnungsgemäße Verankerung des Dübels eintritt.

Der Erfindung liegt die Aufgabe zugrunde, den Spreizdübel der eingangs erwähnten Gattung derart zu verbessern, daß zusätzlich zur Reduzierung des Einschraubwiderstandes ohne Verlust für den Haltewert auch eine bessere Führung der Schraube beim Eindrehen in den Spreizdübel erreicht wird.

Die Lösung dieser Aufgabe wird durch die im Anspruch 1 angegebenen Merkmale erreicht. Durch die Ausbildung des Querschnitts der Verengung als Raute ergibt sich beim Eindrehen der Schraube eine Abstützung an vier gleichmäßig über den Umfang verteilten Stellen, die einen bestmöglichen Zentriereffekt bewirkt. Gleichzeitig wird durch die gleichmäßig auf alle vier Flächen der Raute wirkenden Pressung eine optimale Umsetzung der Preßkraft in Spreizkraft erreicht. Unabhängig davon wird der Einschraubwiderstand ohne Verlust für den Haltewert dadurch reduziert, daß das Eckmaß der Raute in Schlitzebene auf der gesamten Länge der Verengung annähernd dem Durchmesser des zylindrischen Abschnittes entsprechend gleich bleibt. Lediglich das Eckmaß rechtwinklig zur Schlitzebene nimmt zum vorderen Ende des Spreizdübels hin ab und schafft somit die für die Aufspreizung erforderliche Verengung.

In Abhängigkeit vom Verwendungszweck des Spreizdübels kann der Auslauf der Verengung gestaltet werden. Für weiche und poröse Baustoffe wie beispielsweise Gasbeton ist es zweckmäßig, die Verengung des Spreizdübels in der Weise zu gestalten, daß das Eckmaß rechtwinklig zur Schlitzebene sich vor dem vorderen Ende innerhalb des Spreizdübels bis auf die Schlitzweite verengt und in einer Aufspaltung ausläuft. Damit wird im Bereich der Aufspaltung die größtmögliche Spreizwirkung erzielt. Um beim Eindrehen der Schraube bei einem derartigen Dübel eine Verschiebung der beiden durch den Schlitz gebildeten Spreizschenkel in Längsrichtung zu vermeiden ist es ferner vorteilhaft, die Aufspaltung mit einem zickzackförmig verlaufenden Abschnitt zu versehen. Gleichzeitig entstehen durch die Zickzackform der Aufspaltung Höcker in der Spaltebene, die eine noch stärkere Aufweitung ermöglichen.

Zur weiteren Reduzierung des Einschraubwiderstandes kann die Mantelfläche des Spreizdübels mit entlang den beiden Schlitzrändern verlaufenden Längsfugen versehen sein. Dadurch sind die Bereiche des Spreizdübels ausgespart, die lediglich zu einer Klemmung im Bohrloch führen, jedoch nicht zu einer Erhöhung des Haltewertes beitragen.

In der Zeichnung ist die Erfindung anhand von Ausführungsbeispielen näher dargestellt.

Es zeigen:

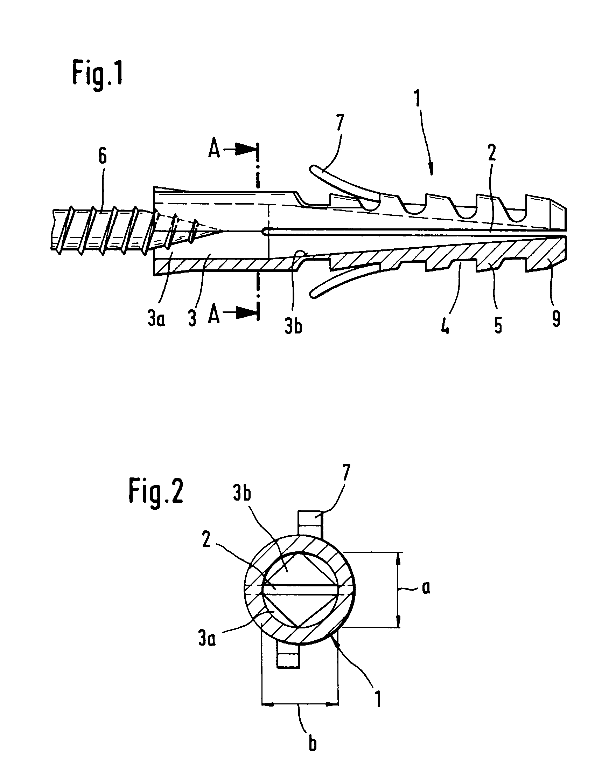

Figur 1 einen Spreizdübel im Teillängsschnitt,
Figur 2 den Spreizdübel nach Figur 1 im Querschnitt gemäß der Schnittlinie A-A,
Figur 3 eine weitere Ausführungsform eines Spreizdübels im Teillängsschnitt und
Figur 4 den Spreizdübel nach Figur 3 im Querschnitt gemäß der Schnittlinie B-B.

Der Spreizdübel 1 ist in Längsrichtung mit einem vom vorderen Ende ausgehenden Schlitz 2 versehen, der bis zum zylindrischen Abschnitt 3a des Längskanals 3 reicht. Die zylinderförmige Außenfläche des Dübels 1 ist mit mehreren Einkerbungen 4 versehen. Dadurch entstehen Zähne 5, die sich beim Aufspreizen des Dübels in weiches Material eingraben und in harten Baustoffen durch plastische Verformung entsprechende Reibungskraft an der Bohrlochwand erzeugen.

An dem zylindrischen Abschnitt 3a des Längskanals 3 des Dübels schließt sich eine Verengung 3b an, die im vorderen Bereich 9 des Dübels 1 ausläuft. Der Querschnitt der Verengung 3b ist als Raute ausgebildet, wobei die Verengung dadurch entsteht, daß lediglich das Eckmaß rechtwinklig zur Schlitzebene (a) zum vorderen Ende (9) des Spreizdübels hin abnimmt. Das Eckmaß in Schlitzebene (b) bleibt auf der gesamten Länge der Verengung 3b annähernd dem Durchmesser des zylindrischen Abschnittes 3a entsprechend gleich. Die zur Verspreizung des Dübels verwendete Befestigungsschraube 6 wird somit auch in der Verengung 3 b durch den rautenförmigen Querschnitt der Verengung auf der gesamten Länge des Dübels geführt.

Mit dem Eindringen der Befestigungsschraube 6 in die Verengung 3b beginnt die Aufspreizung des Spreizdübels. Da die Verengung nur rechtwinklig zur Schlitzebene erfolgt, ergibt sich bei geringem Einschraubwiderstand eine optimale radiale Aufspreizung des Dübels. Obwohl durch den geringen, sich sofort in Spreizkraft umsetzenden Einschraubwiderstand die Gefahr eines Mitdrehens des Dübels beim Eindrehen der Schraube kaum zu befürchten ist, kann es insbesondere für zu groß ausfallende Bohrlöcher zweckmäßig sein, den Dübel zusätzlich noch mit Sperrzungen 7 zu versehen.

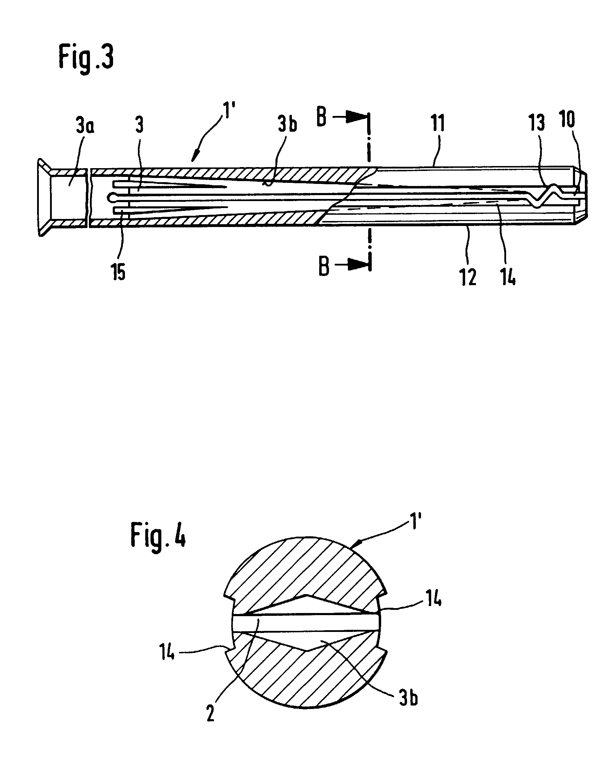

In Figur 3 und 4 ist ein weiteres Ausführungsbeispiel eines Spreizdübels 1' dargestellt. Bei diesem Spreizdübel 1' läuft die Verengung 3b innerhalb des Dübels bis auf die Schlitzweite und in einer Aufspaltung 10 aus. Zur Verzahnung der beiden Spreizschenkel 11 und 12 weist die Aufspaltung 10 einen zickzackförmig verlaufenden Abschnitt 13 auf. Desweiteren ist die Mantelfläche des Spreizdübels 1' mit entlang den beiden Schlitzrändern verlaufenden Längsfugen 14 versehen. Zum besseren Anschneiden der Befestigungsschraube 6 beim Eindrehen in den Spreizdübel 1' können vom zylindrischen Abschnitt 3a des Längskanals 3 beginnend bis in die Verengung 3b hineinreichende Längsrippen 15 angeordnet sein, die in der Verengung 3b auslaufen.

## Patentansprüche

1. Spreizdübel (1, 1') aus Kunststoff mit einem vom vorderen Ende ausgehenden über einen Teil seiner Länge verlaufenden Schlitz (2), und einem vom hinteren Ende des Dübels ausgehenden Längskanal in Form eines zylindrischen Abschnittes (3a), an den sich eine Verengung (3b) anschließt, **dadurch gekennzeichnet,** daß der Querschnitt der Verengung (3b) vom zylindrischen Abschnitt (3a) ausgehend als Raute ausgebildet ist, deren Eckmaß (b) in Schlitzebene auf der gesamten Länge der Verengung (3b) annähernd dem Durchmesser des zylindrischen Abschnittes (3a) entsprechend gleich bleibt, während das Eckmaß (a) rechtwinklig zur Schlitzebene zum vorderen Ende (9) des Spreizdübels (1,1') hin abnimmt.

2. Spreizdübel nach Anspruch 1, **dadurch gekennzeichnet,** daß das Eckmaß (a) rechtwinklig zur Schlitzebene sich innerhalb des Spreizdübels (1') bis auf die Schlitzweite verengt und in einer Aufspaltung (10) ausläuft.

3. Spreizdübel nach Anspruch 2, **dadurch gekennzeichnet,** daß die Aufspaltung (10) einen zickzackförmig verlaufenden Abschnitt (13) aufweist.

4. Spreizdübel nach Anspruch 1, **dadurch gekennzeichnet,** daß die Mantelfläche des Spreizdübels (1') mit entlang den beiden Schlitzrändern verlaufenden Längsfugen (14) versehen ist.

## Claims

1. Expansible fixing plug (1, 1') of plastics material having a slot (2) starting from its leading end and extending for a part of its length, and, starting from the rear end of the fixing plug, a longitudinal channel in the form of a cylindrical portion (3a), adjoining which is a narrowing (3b), **characterized in that** the cross-section of the narrowing (3b), starting from the cylindrical portion (3a), is in the form of a lozenge shape, the corner to corner width (b) of which in the plane of the slot remains the same for the entire length of the narrowing (3b) and corresponds approximately to the diameter of the cylindrical portion (3a), while the corner to corner width (a) at right angles to the plane of the slot decreases towards the leading end (9) of the expansible fixing plug (1, 1').

2. An expansible fixing plug according to claim 1, **characterized in that** the corner to corner width (a) at right angles to the plane of the slot narrows inside the expansible fixing plug (1') to the width of the slot and terminates in a cleft (10).

3. An expansible fixing plug according to claim 2, **characterized in that** the cleft (10) has a portion (13) running in a zig-zag.

4. An expansible fixing plug according to claim 1, **characterized in that** the outer surface of the expansible fixing plug (1') is provided with longitudinal rabbets (14) extending along both slot edges.

## Revendications

1. Cheville expansible (1, 1') en plastique présentant une fente (2) qui part de l'extrémité avant et court sur une partie de sa longueur, ainsi qu'un canal longitudinal, en forme de tronçon cylindrique (3a), qui part de l'extrémité arrière de la cheville et auquel se raccorde un rétrécissement (3b), caractérisée par le fait qu'en partant du tronçon cylindrique (3a), la section de rétrécissement (3b) a la forme d'un losange dont la diagonale (b) dans le plan de la fente reste, sur toute la longueur du rétrécissement (3b), approximativement égale au diamètre du tronçon cylindrique (3a), tandis que la diagonale (a) perpendiculairement au plan de la fente décroît jusqu'à l'extrémité avant (9) de la cheville expansible (1, 1').

2. Cheville expansible selon la revendication 1, caractérisée par le fait que la diagonale (a) perpendiculaire au plan de la fente se rétrécit, à l'intérieur de la cheville expansible (1'), pour atteindre la largeur de la fente et se termine dans une fente ouverte (10).

3. Cheville expansible selon la revendication 2, caractérisée par le fait que la fente ouverte (10) présente un tronçon (3) en zigzag.

4. Cheville expansible selon la revendication 1, caractérisée par le fait que la surface latérale de la cheville expansible (1') est munie de rainures longitudinales (14) qui courent le long des deux bords de la fente.
